# EUROPEAN PATENT APPLICATION

(11) **EP 4 763 509 A1**
(43) Date of publication of application: **24.06.2026**
(21) Application number: 25187579.5
(22) Date of filing: 04.07.2025
(51) Int. Cl.: B32B 7/035, B32B 7/12, B32B 15/085, B32B 15/12, B32B 15/20, B32B 27/08, B32B 27/10, B32B 27/30, B32B 27/32, B32B 29/00, B32B 29/08

(54) **LAMINATED PACKAGING MATERIAL, METHOD FOR MANUFACTURING THE MATERIAL, PACKAGING CONTAINER COMPRISING THE MATERIAL AND METHOD OF MANUFACTURING CONTAINER**

(30) Priority: 20.12.2024 IT 202400029430
(71) Applicant: Tetra Laval Holdings & Finance S.A., 1009 Pully (CH)
(72) Inventor: MÖLLER, Anna, 221 86 Lund (SE); TOFT, Nils, 221 86 Lund (SE); BERGVALL, Erik, 221 86 Lund (SE); TANDOI, Giuseppe, 41123 Modena (IT); DI PADOVA, Michele, 41123 Modena (IT); SCARAMUZZINO, Tommaso, 41123 Modena (IT); BARTOLI, Lisa, 41123 Modena (IT)
(74) Representative: Tetra Pak Patent Attorneys

(57) **Abstract**

The present invention relates to a laminated packaging material (10) for packaging of oxygen sensitive food products, and to a method for manufacturing thereof. The invention further relates to packaging containers comprising the laminated packaging material, for packaging of oxygen-sensitive products, such as food products.

## Description

### Technical field

The present invention relates to laminated packaging materials comprising a bulk layer of paper or paperboard or other cellulose-based material and at least one barrier layer, and to packaging containers comprising the laminated packaging material, for packaging of liquid, semi-liquid or viscous food products, including water. The invention further relates to a method for manufacturing the laminated packaging material and a method for manufacturing the containers.

### Background of the invention

Packaging containers of the single use carton type for liquid foods are often produced from a packaging laminate based on paperboard or carton. One such commonly occurring packaging container is marketed under the trademark Tetra Brik^{®} Aseptic and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. The inside polymer multilayer portion needs to be heat sealable, i.e. thermo-weldable, at high-speed in filling and packaging machines, and needs to keep the formed packaging containers liquid tight both towards the inside of the package and towards the outside. Furthermore, the inside polymer layers need to help protect the barrier coatings from being destroyed during fold-forming and filling processes, as well as maintaining good integrity, should that happen, towards migration of microbes through the package and the materials into the filled food product. Adding thicker and stronger such polymer layers may help to some extent, but such measures weigh against the requirements that we for environmental sustainability must reduce the use of polymer materials in carton liquid packaging materials, and that the packaging materials need to be reasonably easy to open for the end-consumer.

Also on the outside of the bulk layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube, such that the two longitudinal edges of the web are united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedal, by fold forming along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package.

Packages of both types may have a moulded opening device and/or screw cap made of plastic.

A layer of an aluminium foil in the packaging laminate provides gas barrier properties quite superior to most other gas barrier materials. The conventional aluminium-foil based packaging laminate for liquid food aseptic packaging is still the most cost-efficient and low-carbon-emitting liquid packaging material, at its level of performance, available on the market today. There is, however, a striving towards replacing the aluminium foil with non-foil barrier materials to reduce the carbon footprint further. Aluminium foil barriers for liquid carton food packaging are normally from 5 to 9 µm.

Any other material to compete with the foil-based materials must be cost-efficient regarding raw materials, have comparable food preserving properties, a reduced carbon footprint and have a comparably low complexity in the converting of materials into a finished packaging laminate.

Among the efforts of developing non-aluminium-foil materials for liquid food carton packaging, there is also a general incentive towards developing pre-manufactured films or sheets having high and multiple barrier functionalities, which may replace the aluminium-foil barrier material in the conventional laminated packaging material or combine several separate barrier layers in the laminated material and adapt it to conventional processes for lamination and manufacturing.

Examples of such alternative, more environmentally sustainable barrier materials are barrier-coated paper substrates obtained by aqueous dispersion coating and/or vapour deposition coating onto thin paper carrier substrates. Barrier coatings applied as wet, aqueous dispersion coatings or as vapour deposited coatings are very thin, i.e. at the most a few microns thick and in the latter case rather at the scale of 2-digit values of nanometers. Such thin coatings are vulnerable to mechanical stress and strain and benefit from further protection by adjacent layers. Moreover, such thin barrier coatings are not as reliable as a thick metal foil to prevent migration or penetration of other substances than oxygen. Accordingly, there is a need to complement such a barrier coating with more robust polymer layers on its inside in a laminated packaging material, i.e. in the direction towards the filled product in a packaging container made from the packaging material.

Paper-based barrier layers are disclosed in WO2011/003565A1, WO2017/089508A1, EP4008548A1, WO2022/219056A1 and WO2023/084122A1.

Although a great potential is seen in paper-based barrier layers for replacing aluminium-foil in packaging laminates for liquid and wet food, e.g. regarding increasing recyclability and environmental sustainability, there is a need to further improve such laminated packaging materials.

It is important that laminated packaging materials containing paper-based barrier layers function well to provide good robustness and package integrity as they are formed into filled packaging containers by fold-shaping and sealing, such that they can maintain the gas barrier properties of the unfolded materials, as well as block any intrusion of microbes from the exterior of the package, to preserve and secure the quality of the filled food product.

Pre-manufactured blown films have been considered as the innermost layer to protect a paper-based barrier layer. However, this can lead to problems with openability.

There is also a need to fulfil the requirements of demanding package formats. One example of a demanding package format is pouch containers for low-cost aseptic, long-term packaging of liquid food which lack the dimensional stability offered by a thicker paperboard bulk layer, i.e. comprising only a thin paper as the bulk or core layer, which has no, or very low, inherent bending stiffness properties. The packaging containers made from such packaging laminates are not fold-formed but formed into pillow-shaped flexible pouches. Patent publication WO2011/088854A1 relates to such pouches. The thin paper bulk layer is laminated to an aluminium foil to provide e.g. gas barrier and light barrier properties. It further has an outer layer of thermoplastic polymer, and a pre-manufactured polyethylene blown film in the inside polymer layer portion to improve its mechanical robustness.

Another example of a demanding package format is packages holding a volume greater than 1 litre, such as 2-litre or half-gallon packages. Further demanding package formats may be fold-formed package shapes involving more severe folding points with more strain.

Pouch containers and big, or multi-folded, liquid-filled packages are naturally exposed to higher force and strain in handling and distribution, as the flowing food content or liquid moves independently of the package itself when transported, lifted, unloaded and carried. It has until now been difficult to keep the balance between package integrity and openability in such demanding packaging materials and containers.

There is also a need to provide an improved laminated paper-based material for pouch packages and other demanding carton laminate package formats for liquid, semi-liquid and viscous food products, wherein the materials and the barrier metal foil is exposed to considerable stress and strain because they lack sufficient dimensional stability in comparison to conventional fold-formed, cuboid, liquid carton packages.

As an alternative to blown films, the inventors have previously investigated the use of a pre-manufactured cast film as the innermost layer to protect a paper-based barrier layer.

### Disclosure of the invention

It is, accordingly, an object to provide an improved laminated packaging material comprising bulk layer of paper or paperboard or other cellulose-based material and a layer of an oxygen barrier material, for the purpose of packaging of oxygen-sensitive liquid food products, such as liquid, semi-liquid or viscous food products. Preferably, the laminated packaging material is suitable for demanding packaging formats.

It is a further object to provide a non-foil laminated packaging material for liquid, semi-liquid and viscous food products, having good gas and other barrier properties, as well as good mechanical integrity and/or robustness of packages made from the packaging material, and good openability such that the packed food product may easily be accessed by a consumer.

It is a further object to provide such a paper- or paperboard-based laminated packaging material having an increased proportion of recyclable and renewable (i.e. plant-based) materials.

It is a further object to provide such a laminated packaging material in which high quality heat sealing is achieved, including at longitudinal seals.

A further specific object is to provide an improved paper-based laminated packaging material for pouch packages.

### Summary of the invention

In studying laminates having a pre-manufactured cast film as the innermost layer to protect a paper-based barrier layer, the inventors noticed that the innermost heat sealable film of a cast, biaxially-oriented LLDPE film had tendencies to shrink upon exposure to the induced heat, along the longitudinal edges of the tube when heat sealing them together. Thus, the film may shrink in the cross-direction, CD, such that it no longer reaches fully to the longitudinal edges of the continuous blank of material to be tube-folded, filled and transversally heat sealed.

Such shrinkage has not been observed in connection to the use of earlier known blown films, which were used in the same way in the inside polymer layer configuration, as mentioned above. A cast biaxially oriented film may thus have a higher tendency to shrink, as it is often stretched to a higher degree than for example a blown film.

This effect is most significant in the cross direction (CD) between the longitudinal edges. This can result in the innermost layer not properly covering the longitudinal edges of the tube or packaging blank, resulting in poor quality transversal heat seals at the longitudinal seal overlap.

The risk of leakages occurring along the heat sealed longitudinal overlap was concluded to be too high and such risks were thus sought to be eliminated. Accordingly, in developing the invention, the longitudinal sealing area was particularly studied.

Furthermore, it was found that shrinkage occurs particularly when the heat is generated from the interior of the laminated material, such that the adjacent polymer layers (e.g. of LDPE) on the outer side of the innermost film will soften or melt, and thus the film no longer has any adjacent anchoring layer. The innermost film may itself soften and shrink, just before it can participate in the heat sealing operation, to weld the intended polymer surfaces together. This happens thus when heat is generated in the interior metallization barrier coating in the laminate, by induction heating, and the induced heat reaches the interior polymer layers before it reaches the innermost film. The effect of shrinkage has not been observed when the longitudinal seal is made by hot air sealing, in which heat is applied from the outside.

Having identified this problem, the inventors have addressed it in the invention by use of an interjacent layer of higher melting temperature than the innermost layer film, to stabilise and anchor the film during heat sealing and prevent shrinkage.

Thus, according to a first aspect of the invention, there is provided a laminated packaging material for packaging of oxygen-sensitive food products, such as liquid, semi-liquid or viscous food products or water, comprising in order from outside to inside:
- a first outermost, liquid tight, heat sealable layer comprising a thermoplastic polymer;
- a bulk layer of paper, paperboard or other cellulose-based material;
- a barrier layer comprising a cellulose-based substrate and at least one gas barrier coating;
- an interjacent layer comprising HDPE, MDPE, and/or high melting temperature LLDPE having a melting temperature above 115 °C; and
- an innermost liquid tight, heat sealable layer comprising a pre-manufactured cast and biaxially oriented LLDPE-containing film.

According to a second aspect of the invention, there is provided a method for manufacturing of a laminated packaging material as described above, comprising the steps, in any order, of
a) laminating a continuous web of the bulk layer of paper, paperboard or other cellulose-based material to the outer side of a continuous web of the barrier layer,
b) laminating a continuous web of the pre-manufactured film, as an innermost liquid tight, heat sealable layer, to the other, inner side of the web of the barrier layer, by melt extrusion lamination, with the interjacent layer, and
c) extrusion coating a first outermost, liquid tight, heat sealable layer on the outer side of the bulk layer.

According to a third aspect of the invention there is provided a packaging container for packaging of liquid, semi-liquid or viscous food products, comprising the laminated packaging material of the first aspect. The packaging container is manufactured at least partly from the laminated packaging material, and according to a further embodiment it is in its entirety made of the laminated packaging material. The packaging container formed from the laminated packaging material may be partly sealed, filled with liquid or semi-liquid food and subsequently sealed, by sealing of the packaging material to itself, optionally in combination with a plastic opening or top part of the package.

According to a fourth aspect of the invention there is provided a method of manufacturing such a packaging container from a web or blank of the laminated packaging material.

According to a fifth aspect of the invention there is provided a laminated packaging material for pouch packaging of oxygen-sensitive food products, such as liquid, semi-liquid or viscous food products or water, comprising in order from outside to inside:
- a first outermost, liquid tight, heat sealable layer comprising a thermoplastic polymer;
- a bulk layer of paper, paperboard or other cellulose-based material having a grammage from 50 to 140 g/m², such as from 70 to 120 g/m², such as from 70 to 110 g/m²;
- a barrier layer of aluminium foil;
- an interjacent layer comprising HDPE, MDPE, and/or high melting temperature LLDPE having a melting temperature above 115 °C; and
- an innermost liquid tight, heat sealable layer comprising a pre-manufactured cast and biaxially oriented LLDPE-containing film.

### Detailed description

With the term "long-term storage", in connection with the present invention, it is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

The term "aseptic" in connection with a packaging material and packaging container refers to conditions where microorganisms are eliminated, in-activated or killed. Examples of microorganisms are bacteria and spores. Generally, an aseptic process is used when a product is aseptically packed in a packaging container. For the continued aseptic conditions during the shelf-life of the package, the package integrity properties are of course very important. For long-term shelf-life of a filled food product, it may furthermore be important that the package has barrier properties towards gases and vapours, such as towards oxygen gas, to keep its original taste and nutritional value, such as for example its vitamin C content, intact.

With the term "bulk layer" is normally meant the thickest layer or the layer containing the most material in a multilayer laminate, i.e. the layer which is contributing most to the mechanical properties and dimensional stability of the laminate and the structural stability of packaging containers folded from the laminate, such as a thick paper, paperboard or carton. It may also mean a layer providing a greater thickness distance in a sandwich structure, which further interacts with stabilising facing layers, which have a higher Young's modulus, on each side of the bulk layer, to achieve sufficient such mechanical properties, such as bending stiffness, for achieving structure stability of formed packaging containers.

By the term "non-foil" packaging material, is meant a laminated packaging material, which does not comprise an aluminium foil of a thickness in the micrometer-scale, such as conventional aluminium foils for liquid carton packaging. A "non-foil" packaging material may comprise a metallisation layer, however, as the thickness of e.g. an aluminium metallisation layer is in the nano-meter scale. The amount of aluminium material employed in such a metallisation coating is very low, and has, in comparison to aluminium foils, a significantly reduced impact on recycling and exploitation of material resources.

The term "polyethylene" refers to a polymer comprising ethylene monomers at from about 90 to 100 mol%. There are various types of polyethylene, as explained below.

Low density polyethylene, LDPE, has a density of 917 to 930 kg/m³. It is typically polymerised from ethylene monomers alone and has a branched polymer chain structure with long chain branches, leading to a more branched and less tightly packed molecular arrangement, and a lower overall density than for medium density polyethylene, MDPE, and high density polyethylene, HDPE.

The term "linear low density polyethylene" (or "LLDPE") covers all linear low density polyethylenes, including "ZN-LLDPE" polymerised by means of Ziegler-Natta type catalysts as well as "m-LLDPE" polymerised by catalysts of so-called "constrained geometry", or "single-site" catalysts, such as "metallocene" catalysts, and other linear low density polyethylenes. Both ZN-LLDPE and m-LLDPE are typically produced by copolymerising an ethylene monomer with a C₄-C₈, more preferably a C₆-C₈, alpha-olefin alkylene monomer, the latter in the presence of a metallocene catalyst. 1 to 10 mol%, suitably 8 to 10 mol%, comonomer content is typical. LLDPE has significant numbers of short branches. It differs structurally from conventional low-density polyethylene (LDPE) because of the absence of long chain branching. LLDPE polymers typically have a narrower molecular weight distribution than conventional LDPE (this is true for m-LLDPE especially) and significantly different properties. A higher number of short chain branches will lead to a lower degree of crystallinity, because the crystallisation is suppressed in the polymer and therefore its density becomes lower than for MDPE and HDPE.

High density polyethylene, HDPE, and medium density polyethylene, MDPE, suitable for use in the interjacent layer have a density of 930 to 970 kg/m³. Up to 2 mol% comonomer content is typical in these polymers of linear type polymer molecules. The lack of long chain branching is ensured by an appropriate choice of catalyst (e.g. ZN catalysts) and the reaction conditions.

MDPE may have a medium level of density, typically ranging from 0.926 to 0.940 g/cm³, while HDPE may have a higher density, typically ranging from 0.941 to 0.965 g/cm³.

The term "mPE" refers to a blend of mLLDPE and LDPE, or to a material which resembles such a blend through polymerisation rather than blending. Two different catalysts can be used during the polymerisation to produce more linear polymers with short chain branches in one part and in the other part more long-chain branches to resemble an LDPE part of a blend.

The term "dispersion coating" herein relates to a coating technique in which an aqueous or substantially aqueous dispersion, suspension, emulsion or solution of a polymer is applied to the surface of a substrate layer, usually in the form of a continuous web, to form a solid, substantially non-porous film after drying. The term "dispersion" covers thus also any solution, suspension, emulsion or solution or mixes thereof, that would be capable of providing such a coating after drying. Polyvinyl alcohols (PVOH, PVAL) are typical polymers suitable for dispersion coating, but may for example at high saponification degrees in practice rather be polymer solutions, or mixes of dispersed and dissolved PVOH. A dispersion-coated barrier layer or coating is formed by a dispersion coating, also called "liquid-film coating", techniques. The aqueous dispersions may comprise fine polymer particles, and be a latex.

The term "latex" as used herein refers to a composition comprising an aqueous suspension or dispersion or emulsion of polymer particles, which can be natural polymers, synthetic polymers, synthetic polymers derived from biomasses or combinations thereof.

Grammages of papers were determined according to the official test method of ISO 536:2019 by the unit g/m², while thickness and density were determined according to ISO 534:2011, by the units µm (m) and kg/m³, respectively.

Thickness measurements of coated polymer layers on paper may be measured and estimated by taking sliced section samples of the structure and studying them in a SEM microscope. The slicing may be done using e.g. a cryo microtome.

With the term "package integrity", is generally meant the package tightness, i.e. the resistance to leakage or breakage of a packaging container. The term encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes and the like within each material layer itself, and yet another contribution comes from the strength of the sealing joints, by which the material is sealed together at the formation of a packaging container. Regarding the laminated packaging material itself, the integrity property is mainly focused on the adhesion of the respective laminate layers to its adjacent layers and on the ability to withstand thermal- and mechanical loads e.g. during folding and sealing, without fracturing or substantial thinning of material thicknesses. Regarding the sealing of the packages, the integrity is mainly focussed on the quality of the sealing joints, which is ensured by well-functioning and robust sealing operations in the filling machines, which in turn is ensured by adequately adapted heat-sealing properties of the laminated packaging material.

The term "liquid, semi-liquid or viscous food" generally refers to food products having a flowing content. The term liquid food includes water. Dairy and milk, soy-, rice-, grain- and seed-based drinks, juice, nectar, still drinks, water, flavoured water, energy drinks, sport drinks, coffee or tea drinks, coconut water, wine, soups, sauce (such as pasta sauce) and olive oil are some non-limiting example of food products contemplated. Yoghurt, tomato puree and crushed tomatoes are examples of viscous food.

### Outermost Layer

The outermost liquid-tight layer of thermoplastic polymer does not normally add recognizable barrier properties to migrating gas molecules or small molecules (this is also true of the innermost layer and the bonding, tie and interjacent layers). Its purpose is to provide a direct barrier to water or other liquids from penetrating through to the cellulose-based bulk material and other sensitive layers and to act as an aseptic barrier, maintaining package integrity to protect the filled contents inside the package.

The liquid barrier layers also prevent water vapour from migrating to the cellulose to the extent that it gets wet, but they are not capable of keeping the moisture content of the laminated structure at zero or at the low level of "dry" paper (which is at about 7-8 % in an environment at ambient temperature, i.e. at 23 °C, and 50 % relative humidity, RH). The moisture content in the laminated carton material of a packaging container filled with liquid is usually rather high and migration through the material occurs, unless there is a further water vapour barrier included.

Suitable thermoplastics for the outermost liquid-tight layer are polyolefins such as polyethylene and polypropylene homo- or co-polymers, preferably polyethylenes and more preferably polyethylenes selected from the group consisting of LDPE, LLDPE, m-LLDPE and blends or copolymers thereof. According to an embodiment, the outermost liquid-tight layer is an LDPE e.g. 19N730^{™} from Ineos.

The outermost, liquid-tight layer of a polymer may be applied to the bulk layer at from about 5 to 15 g/m², such as from 8 to 15 g/m².

### Bulk Layer

For the main embodiment, a suitable paper or paperboard bulk layer may have a thickness of from about 100 µm up to about 650 µm, and a surface weight approximately from 100 to 520 g/m², preferably from about 150 to about 300 g/m² e.g. 180 to 300 g/m², and may be a conventional paper or paperboard of suitable packaging quality. The purpose of the bulk layer in the laminated packaging materials of the present invention is to provide dimensional stability, rigidity and stiffness to packaging containers, e.g. for use in wet and humid conditions and/or for storage of liquids and wet (heavy) food products. A suitable bending stiffness is 80 mN.

A suitable bulk layer paper for the pouch package embodiment may have a surface weight of from about 50 to about 140 g/m², preferably from about 70 to about 120 g/m², more preferably from about 70 to about 110 g/m². Above 150 g/m², bending stiffness is typically too high for pouches.

### Bonding Layer

The barrier layer may be laminated to the bulk layer by means of a bonding layer of one or more polymers, such as a thermoplastic polymer, an adhesive thermoplastic polymer, or a binder.

Suitable thermoplastic materials include those discussed for the outermost layer above, for example polyolefin such as a low density polyethylene (LDPE) layer. The bonding layer may have a configuration of three part-layers, e.g. co-extruded centre layer of mLLDPE and side layers of LDPE.

Suitable bonding layers may also be so-called adhesive thermoplastic polymers, such as adhesive polyolefins, which are based on LDPE or LLDPE co-polymers or graft co-polymers with a low, modifying amount of functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethylene-glycidyl(meth)acrylate copolymer (EG(M)A) or MAH-grafted polyethylene (MAH-g-PE). Other examples of such adhesive polymers are so called ionomers or ionomer polymers. Preferably, the adhesive polyolefin is an ethylene acrylic acid copolymer (EAA) or an ethylene methacrylic acid copolymer (EMAA).

Thermoplastic or adhesive thermoplastic polymer bonding layers suitably bind the bulk layer to the barrier layer by melt extrusion laminating the bonding polymer layer between a web of the bulk layer and a web of the barrier layer, and simultaneously pressing the three materials together while they are forwarded as a laminate web through a lamination roller nip, thus providing a laminated structure. Such melt extrusion lamination is suitable for most choices of barrier layers, so that sufficient adhesion between the bonded material layers is achieved and retained.

The preferred amount for the bonding layer is as low as possible to minimise the amount of material used, i.e. 6 to 15 gsm, preferably 6 to 12 gsm, such as 6 to 10 gsm, such as 7 to 9 gsm. These amounts are particularly suitable for portion packs; up to 20 gsm may be used for larger packs.

In an alternative embodiment to the use of thermoplastic polymer, the paper- or cellulose-based barrier substrate may be bonded to the bulk layer by wet application of an aqueous dispersion composition, comprising an adhesive polymer binder, onto one of the web surfaces to be laminated and pressing the two webs together while they are forwarded through a lamination roller nip, thus providing a laminated structure by wet lamination. The moisture of the aqueous adhesive composition is absorbed into the fibrous cellulose network of the two paper layers, and partly evaporates with time, during the subsequent lamination processes, to form a thin and dry bonding layer at the interface between the two layers. There is thus no need for a forced drying step. The adhesive polymer binder may be selected from the group consisting of acrylic polymers and copolymers, starch, cellulose and polysaccharide derivatives, polymers and copolymers of vinyl acetate and vinyl alcohol, and copolymers of styrene-acrylic latex or styrene-butadiene latex. For the best possible environmental and sustainability profile, adhesive binders originating from plant-based or non-fossil sources are preferred.

Suitably, a barrier-coated paper substrate may be wet laminated to the bulk layer by from 0.5 or 1 to 5 g/m² of the bonding composition, dry weight. Such a low amount of bonding composition can be applied by aqueous dispersion or solution coating of a polymer binder, whereas extrusion coating or extrusion lamination of the same low amount as a single polymer melt is very hard to do and in any case would not achieve sufficient melt bonding to the adjacent laminated webs.

### Paper-Based Gas Barrier Layer

In the paper-based gas barrier layer of the main embodiment of the invention, the paper substrate has at least one coating of gas barrier material. Such thin coatings will not produce reject or waste when the used laminated packaging materials comprising such coatings are recycled in conventional cellulose fibre recycling streams, and the coatings do not require much material relative to the benefit that they provide.

The paper substrate is relatively thin (e.g. 30 to 75 g/m², or 25 to 100 µm) and has suitable properties to carry thin barrier coatings. A high smoothness of the top-side to be coated, i.e. a low surface roughness, is required for good barrier coating quality. This may be achieved by the paper itself, or by base coating and/or impregnating the paper substrate. Furthermore, a paper substrate may benefit from having a high density, such as 750 kg/m³ or higher, such as from 800 to 1500 kg/m³, such as from 850 to 1400 kg/m³.

Preferably the coating(s) comprise a gas barrier polymer and/or a vapour deposition coating of a gas barrier material selected from metals, metal oxides, inorganic oxides and amorphous diamond-like carbon coatings.

The at least one gas barrier coating may be formed by coating and subsequent drying of a dispersion or solution of an aqueous composition of at least one gas barrier material. The thus applied gas barrier coating forms a continuous and uninterrupted layer of gas barrier material onto the surface of the paper substrate.

The top-side surface of the paper substrate may according to one embodiment be coated to a dry coating thickness from 100 to 4000 nm (from 0,1 to 4 µm), such as from 300 to 3500 nm (from 0,3 to 3,5 µm), such as from 300 to 2500 nm (from 0,3 to 2,5 µm), with a gas barrier material comprising a polymer.

The gas barrier material may comprise a polymer selected from the group consisting of vinyl alcohol polymers or copolymers, such as polyvinyl alcohol, PVOH, or ethylene vinyl alcohol, EVOH, and polysaccharides or polysaccharide derivatives. Suitable polysaccharides or polysaccharide derivatives may be selected from the group consisting of starch, starch derivatives, modified starch, chitosan, chitosan derivatives, cellulose, cellulose derivatives, and lignocellulose derivative compounds. In an embodiment, the polymer is of renewable (i.e. non-fossil based) origin.

In a more specific embodiment, the gas barrier material may comprise a polymer selected from the group consisting of vinyl alcohol polymers and copolymers, such as from the group consisting of polyvinyl alcohol, PVOH, and ethylene vinyl alcohol, EVOH, starch and starch derivatives, xylan, xylan derivatives, nanofibrillar cellulose /microfibrillar cellulose, NFC/ MFC, nanocrystalline cellulose, NNC, and blends of two or more thereof. Vinyl alcohol polymers and copolymers are preferred. NFC/MFC are less preferred as they do not provide such a smooth surface for vapour deposition coating.

Suitable EVOH is applied by aqueous dispersion rather than melt extrusion and can be thought of as a modified PVOH with 3-15% ethylene comonomer content, e.g. 3-8 % ethylene. This is referred to as "EVOHaq".

Preferably, the gas barrier material is capable of providing oxygen gas barrier properties at only a very low amount of coating, i.e. a very thin coating, such as below 1 g/m² or below 1,5 µm.

Such thin coatings are obtained by dispersion or solution coating of a gas barrier material comprised in an aqueous gas barrier composition and subsequent drying and cannot be applied at the thin coating thicknesses by any alternative method, such as extrusion coating.

In a preferred embodiment, a coating at from 0,5 to 3,5 g/m², such as from 1 to 3 g/m², such as 1 to 2 g/m², of PVOH is applied on the top-side surface of the paper substrate.

Further, when the gas barrier material coating is formed by coating and subsequent drying a dispersion or solution of a gas barrier composition, it may comprise a laminar compound, such as a nano-dimensional laminar clay, talcum or CaCO₃.

A polymer for impregnation or base-coating may be selected from starch, starch derivatives, carboxymethyl-cellulose, CMC, or other cellulose ethers, and be applied at an amount from 0.5 to 4 g/m², such as from 0.5 to 3 g/m², such as from 0.5 to 2 g/m², such as from 0.5 to 1.5 g/m², dry weight. The gas-barrier coating may be subsequently applied on top of the impregnated or base-coated top side of the paper as a continuous, uninterrupted coating at a total thickness from 200 to 4000 nm (4 µm), such as from 500 to 3000 nm (3 µm).

The thus gas-barrier coated paper substrate may have on its top-side coated surface a further vapour deposition coating of a gas barrier material selected from metals, metal oxides, inorganic oxides and amorphous diamond-like carbon coatings. The vapour deposition coating is preferably an aluminium metallisation coating. Other examples of vapour deposition coatings are aluminium oxide (AlOx, Al₂O₃) and silicon oxide (SiOx) coatings.

The coated paper substrate having a gas barrier material coating applied may thus be further and subsequently coated by a vapour deposition coating at a thickness of from 2 to 200 nm, such as from 5 to 150 nm, such as from 5 to 130 nm, such as from 5 to 110 nm, such as from 5 to 90 nm, such as from 5 to 80 nm, such as from 5 to 50 nm.

A coated paper substrate may further be provided, wherein the backside of the paper substrate is also base-coated and/or impregnated with at least one coating or at least one gas barrier coating as defined in any of the above embodiments.

The vapour deposited barrier coating to finally be coated onto the top-side surface of the base-coated and/ or barrier-coated paper substrate is applied by means of physical vapour deposition (PVD) or chemical vapour deposition (CVD), for example by plasma enhanced chemical vapour deposition (PECVD).

Generally, below 5 nm the barrier properties may be too low to be useful and above 200 nm, such as above 150 nm, such as above 100 nm, depending on the type of vapour deposition coating, the barrier coating may be less flexible and, thus, more prone to cracking when applied onto a flexible substrate and would also cost more.

PVD-coatings of oxides may be less suitable for incorporation into packaging materials by lamination, while metallised layers made by PVD are highly suitable in flexible packaging laminates.

Normally, an aluminium metallised layer inherently has a thin surface portion consisting of an aluminium oxide due to the nature of the metallisation coating process used.

The purpose of a metallisation aluminium coating, or an aluminium oxide coating may be to add oxygen-barrier properties. The purpose may alternatively be to add primarily water vapour barrier properties for the purpose of protecting the oxygen barrier inherent to other, first applied coatings. Coatings applied as aqueous dispersions of gas barrier polymers and subsequent drying are often moisture sensitive, such that their oxygen barrier deteriorate with an increase of the moisture content in the laminate layers. A metallisation layer on top of such a moisture-sensitive coating efficiently protects the dispersion coated coating against moisture migrating from the wet or liquid food product inside of the packaging container. It is thus important that the metallisation coating fully covers the oxygen barrier coating beneath it and remains intact throughout lamination operations and folding and forming operations, such that the filled packages still have effective barrier properties against the migration of oxygen, as well as water vapour.

In an embodiment, such an aluminium metallised layer has been applied to an optical density (OD) of from 1.8 to 4, preferably from 1.9 to 3.5. At too high metal thickness, the thermostability during the metallisation process will be low due to higher heat load when metallising the substrate film during a longer time. The coating quality and adhesion may then be negatively affected.

In a preferred embodiment, the aluminium metallised coating is an oxygen-enriched metallisation coating, i.e. having a metallic appearance and conductive properties, but being boosted with additional oxygen to produce aluminium oxide at the surface of the substrate during the coating operation.

In an embodiment, regarding flexibility of the coated metallization coating and regarding coating operational efficiency, the metal deposition coating is applied to a thickness of from 10 to 200 nm, such as from 10 to 150 nm, such as from 10 to 100 nm, such as from 10 to 95 nm, such as from 10 to 80 nm, such as from 10 to 50 nm, which corresponds to less than 1 - 3 % of the aluminium metal material present in an aluminium foil of conventional thickness for packaging.

Other coatings may be applied by means of a plasma enhanced chemical vapour deposition method (PECVD), wherein a vapour of a compound is deposited onto the substrate under more or less oxidising circumstances. Silicon oxide coatings (SiOx) may, for example, also be applied by a PECVD process, and may then provide very good barrier properties under certain coating conditions and gas recipes.

DLC defines a class of amorphous carbon material (diamond-like carbon) that displays some of the typical properties of diamond. Preferably, a hydrocarbon gas, such as e.g. acetylene or methane, is used as process gas in a plasma for producing a coating of amorphous hydrogenated carbon barrier layer applied by a PECVD vacuum process, i.e. a DLC. DLC coatings applied by PECVD under vacuum provide good adhesion to adjacent polymer or adhesive layers in a laminated packaging material. Particularly good adhesion to adjacent polymer layers is obtained with polyolefins and in particular polyethylene and polyethylene-based co-polymers.

Further coating layers for the common purpose of improving the oxygen barrier of the barrier-coated paper may be applied, such as further top coatings or base coatings for the vapour deposition coating.

The total applied thickness of the continuously and uninterruptedly covering gas-barrier coatings may be up to 5 µm, such as 4 µm, such as 3,5 µm.
The gas barrier coating is suitably directed inwards (CFI, coating facing inwards) to provide moisture protection to the gas barrier polymer and paper, and thereby maintain the oxygen gas barrier properties of the gas barrier polymer.

### Interjacent Layer (and Tie Layer)

The pre-manufactured cast film of the innermost, liquid tight, heat sealable layer is laminated to the barrier layer by means of the interjacent layer.

Preferred amounts of the interjacent layer are 23 to 35 g/m², such as 23 to 30 g/m², preferably 23 to 30 g/m², such as 23 to 29 g/m2, such as 25 to 29 g/m2.

A preferred grade of HDPE is Rigidex HD6070FA from Ineos.

Preferred LLDPEs have a melt flow ratio, MFR, from 4 to 20 g/10 min (190 °C/ 2.16 kg).

Preferred LLDPEs have a melting temperature of more than 120 °C.

A preferred grade of high melting temperature LLDPE is Elite^{™} 5811 from Dow. This is a higher density LLDPE with bimodal properties. Preferably the LLDPE is an m-LLDPE.

Preferably, the interjacent layer comprises a blend of HDPE or MDPE with LDPE, or consists of high melting temperature LLDPE.

Thus, preferably, where the interjacent layer includes HDPE or MDPE, it also includes LDPE. LDPE adds some load-distributing properties to the load-bearing properties of most pure HDPE or MDPE polymers, such that they become easier to melt process and also such that they substantially maintain their thermomechanical properties, while the tensile properties upon mechanical strain and stress are improved and their anisotropic behaviour is reduced. This is advantageous at fold-forming, when used as a material layer in a laminated carton material. HDPE and MDPE polymers suitable for the interjacent layer in the present invention preferably have a density from 0.93 to 0.965 g/cm³.

Preferably in this embodiment, the interjacent layer comprises a blend of 40 to 80 wt% HDPE or MDPE, preferably 50 to 70 wt% HDPE or MDPE, and 20 to 50 wt% LDPE. Thus, preferred HDPE-LDPE blends are 40:60 to 80:20 HDPE:LDPE.

The inclusion of LDPE is not necessary however when high melting temperature LLDPE is used. It has been found by the inventors that such an LLDPE polymer has both load-bearing and load-distributing capacity, such that it both resists the mechanical loads on the oxygen barrier layers during fold-forming and is capable to handle the strain in the polymer without blending with further polymers. The load-bearing mechanisms are thought to be different from the ones in HDPE or MDPE. Preferably, the interjacent layer comprises the high-melting LLDPE at 100 weight-% of the layer, or from 90 to 100 weight-% of the layer in a blend with 0 to 10 weight-% LDPE.

Preferably, the laminate further comprises a tie layer to bond the interjacent layer to the gas barrier layer. This is advantageous to maintain adhesion in long-term packaging and storage of filled packages, in particular when the adhesion is to a metal surface of the gas barrier layer such as an aluminium metallisation coating. The tie layer may be of an adhesive, functionalised polyethylene, such as EAA. Suitably, the interjacent layer is co-extruded with the tie layer.

In a preferred embodiment, the interjacent layer is adjacent to and in direct contact with the pre-manufactured cast film of the innermost layer. Such a layer configuration provides a cost-efficient and well-functioning packaging laminate. There are as few extruders as possible, while providing properties needed in the inner layers, i.e. heat sealability, liquid-tightness, load-endurance upon folding and straining, good adhesion to the barrier layer, and openability of the packaging laminate.

In the pouch embodiment, the tie and interjacent layers are suitably applied at from 5 to 7 and from about 5 to 20 g/m², respectively, depending on the size and type of the pouch container to be produced.

### Innermost Layer

The pre-manufactured LLDPE-based film of the innermost layer for the laminated packaging material is cast instead of blown, and is biaxially oriented.

Preferably, the pre-manufactured film comprises from 60 to 100 weight % of linear-low density polyethylene, LLDPE, more preferably 80 to 100 % LLDPE, e.g. 90 to 100 % LLDPE.
Preferably, the LLDPE is preferably m-LLDPE.

Preferably, the pre-manufactured film has:
- a total thickness from 15 to 25 µm,
- an Elastic Modulus of at least 400 MPa in the MD, and of at least 500 MPa in the CD, as measured by ASTM D 882-02 (2018) with an initial strain rate of 0.1 mm/(mm*min),
- a tensile strength above 40 MPa, such as above 50 MPa, in the MD and above 100 in the CD, as measured by ASTM D638M-14 (2017) at 200 mm/min crosshead rate,
- an elongation at break below 350 % in the MD and below 100 % in the CD, as measured by ASTM D638M-14 (2017) at 200 mm/min crosshead rate,
- a seal initiation temperature, SIT, from 80 to 100 ° C as determined by ASTM F1921 (2018) at 2N,
- a maximum hot tack force above 7 N, as measured by ASTM F1921 (2018), and/or
- a puncture resistance of 10 N or higher, as measured according to ASTM F1306-16 (2016) at a crosshead speed of 500 mm/min.

Preferably, the pre-manufactured film has a core layer comprising more than 60 weight-% of m-LLDPE, a first "skin" layer on one side of the core layer, also comprising m-LLDPE and being further adapted for heat sealing of the film than the polyethylenes of the core layer, and optionally a second skin layer on the other side of the core layer. The LLDPE of the heat sealable skin layer may be further adapted for improving the heat sealability of the film by having a higher melt flow rate (i.e. melt index) and a lower density than the LLDPE of the core layer.

Whilst m-LLDPE is preferred for use in the core layer, other layers such as the skin layers may suitably comprise Ziegler-Natta LLDPE.

The pre-manufactured film is polyethylene-based, but may contain minor amounts of additional polyolefin compounds, such as copolymers of ethylene and propylene for adjustment of various film properties.

The LLDPE of the cast film, and/or of the core layer of the cast film, may have a melt flow ratio/ melt flow index (MFR/ MFI) of from 2 to 5 g/10min at 2.16 kg, 190 °C, as measured according to ASTM D1238 or ISO 1133. The major LLDPE base for a blown film, on the other hand, has a melt flow ratio of 1 or lower, to fulfil requirements for a film blowing manufacturing process. It has been found by the inventors that this leads to a significant difference in properties for suitability as a polymer in a pre-manufactured, heat-sealable film for the innermost layer, with cast films being more suitable. Blown films normally require a further extrusion-coated polyethylene layer on their inside surface, to be heat sealed and to be in contact with a filled food product, but this is not generally necessary for cast films.

Examples of suitable LLDPE for the core layer are those with melting indices of 1 to 4 g/10 min (measured at 190 °C and 2.13 kg conditions), densities from 0.915 or lower to 0.930 g/cm³, and melting peaks within a range from of 90 to 138° C.

The LLDPE of the first (sealant-side) skin layer may have a higher melt index and a lower density than the LLDPE of the core layer and/or the optional second skin layer, in order to enhance the heat-sealing properties of the sealant side layers and to avoid visual distortions and rheological defects caused by the sealing.

By further adapting the heat sealable skin to further preserve and provide the film to exhibit a low seal initiation temperature and a high hot-tack force, the sealability of the film may be optimised. Because the film blowing process and type of polymers used therefor result in film layers varying to quite some extent in thickness within the plane extension of the film, blown films need to be made rather thick for sufficient and reliant heat sealability properties. Since the conformity of film thickness is better in bioriented cast films, such a film, including the heat sealable skin layer, may also be made thinner, such as by increased orientation of the layers of the film.

Preferably, the pre-manufactured film has a stretching ratio from 5 to 7 in the machine direction, MD, and from 7 to 10 from in the cross direction, CD. The degree of orientation, i.e. stretching of the polymers in the film is thus very high, in comparison to blown films in particular, but also in comparison to many cast, biaxially oriented films, and unusually high in the CD vs the degree of orientation in the MD. Such degrees of stretching are attainable in a tenter-frame equipment. The high degree of stretching is reflected in the properties of the film, e.g. by the significantly higher tensile strength and the lower elongation at break in the CD. Such films may also be produced, for example, on a bi-orientation line, such as that described in United States Patent No. 8080294.

Preferably, the pre-manufactured film has a total thickness from 16 to 23 µm, such as from 16 to 20 µm. It is important to the openability of a laminated packaging material that the bioriented film not be too thick, but this must be balanced against the need for good mechanical properties.

In an embodiment, the core layer of the pre-manufactured film has a thickness from 10 to 18 µm, such as from 10 to 16 µm, such as from 10 to 14 µm.

Preferably, the core layer comprises from 80 to 100 weight-% of LLDPE polymer, such as m-LLDPE, more preferably from 90 to 100 weight-%, such as above 90 weight-% LLDPE, such as preferably m-LLDPE.

In a further embodiment, the thickness of the first skin layer, and of the optional second skin layer, is from 0.5 to 3, such as from 1 to 3, such as from 2 to 3 µm. Preferably, the film has one skin layer on each side of the core layer, for optimal stability and mechanical symmetry of the film, thus avoiding phenomena such as curling of the film etc. The polymer of the optional skin layer need not be especially adapted for any property but should preferably match the mechanical properties and the melt processability properties of the core and the heat sealable skin layer. It may comprise an LDPE polymer, and optionally LLDPE polymer(s) of the same or different kind as comprised in the core layer. The surface of the optional skin layer may be adapted or treated to optimise adhesive or frictional properties, for example.

The pre-manufactured film may comprise further thin layers to tighter bond the skin layer(s) to the core layer, so-called tie layers, of the same or different types of polymers as used in the core layer. The thickness of the tie layers is typically in the range of 0.50 to 25 µm.

The pre-manufactured film may further comprise additives or other polymer compounds, such as anti-block agents (e.g. zeolite or silicate) and anti-slip agents (e.g. erucamide, silicone gum or PMMA) and hydrocarbon resins to further improve film qualities and processability. The sealant-side skin layer may comprise a greater concentration of anti-block agents than other layers.

Preferably, the pre-manufactured film has a seal initiation temperature, SIT, from 80 to 95 °C, such as from 80 to 90 °C, as determined by ASTM F1921 (2018) at 2N. Also preferably, the pre-manufactured film has a maximum hot-tack seal strength, above 8 N, as measured by ASTM F1921 (2018). The combination of a low seal initiation temperature and a high maximum hot tack force at low temperature ensures a rapid and immediate sealing operation, allowing for fast filling machines and reliable seal strength in the filled packaging containers.

Preferably, the pre-manufactured film has a puncture resistance of 10 N or higher, as measured according to ASTM F1306-16 (2016) at a crosshead speed of 500 mm/min, and exhibits an elongation at puncture (i.e. at maximum load) lower than 10 mm. This property is important for the ability of the film to withstand penetration and rupture of the film by rapid impact of a protrusion onto the surface, i.e. the resistance of the film to "pointed impact". This may be a useful property in filled packages that are relying on a paper-based oxygen barrier material or other less flexible materials, or in packages subject to sudden impact or forces. The high puncture resistance value of 10 N or higher ensures that such impact or force needs to be quite high before any damage to the film would occur.

Suitable pre-manufactured films are disclosed in US2018/361722A of Jindal Films Americas LLC. A preferred pre-manufactured polyethylene film is SealTOUGH 18XE400, manufactured by Jindal Films. Minor adjustments to amounts of additives may be made e.g. for food safety. Properties of SealTOUGH 18XE400 are shown in Table 1.

**Table 1**

| Film sample ID / Film properties | | SealTOUGH 18X400 |
|---|---|---|
| Elastic Modulus (MPa), at 10 mm/min crosshead rate | MD | 494 |
| | CD | 539 |
| Tensile strength (Stress at break) (MPa), at 200 mm/min crosshead rate | MD | 52 |
| | CD | 129 |
| Elongation at break (Strain at break) (%) at 200 mm/min crosshead rate | MD | 291 |
| | CD | 67 |
| Seal initiation temp., SIT, (°C) at 2 N | | 90 |
| Maximum Hot Tack force (N) | | 8.6 |
| Puncture resistance Max load (N) | | 10 |
| Elongation at puncture (at max load) (mm) | | 8 |
| Film thickness (µm) | | 18 |

The measurements of E-modulus were performed with a sample specimen length of 100 mm. The strain rate was adjusted to this specimen length by using a grip separation speed of 10 mm/min, as according to ASTM D 882-18. Accordingly, the initial strain rate was 0.1 mm/(mm*min).

Thickness measurements were performed in accordance with ASTM E252-06.

The tensile strength was measured according to ASTM D638M-14 (2017) at a 200 mm/min crosshead rate.

The elongation at break was measured by ASTM D638M-14 (2017) at 200 mm/min crosshead rate.

The seal initiation temperature, SIT, from 80 to 100 °C was determined by ASTM F1921 (2018) at 2N.

The maximum hot tack force was measured by ASTM F1921 (2018).

The puncture resistance was measured according to ASTM F1306-16 (2016) at a crosshead speed of 500 mm/min.

Although it is not generally necessary, the innermost layer may further comprise an extrusion coated heat seal layer on the product contact side of the pre-manufactured cast film This is particularly appropriate for larger packages. The extrusion coated heat seal layer is suitably an mPE layer, for example of blend grade Elite 5800 from Dow, corresponding to a blend of about 70 wt-% mLLDPE and about 30 wt-% LDPE.

### Other Features of Laminated Packaging Material

In a preferred embodiment, the laminated packaging material comprises at least one laminated opening hole in which a hole in the bulk layer is covered by the other layers of the laminated packaging material. The configuration of the inner layers (including the barrier layer, the interjacent layer and the innermost layer) supports the membrane of the pre-cut, laminated hole better in heated operations, such as in lamination of the material and in heat sterilization in a filing machine, by its better thermomechanical resistance. This is a result of the interjacent layer comprising HDPE, MDPE or high melting temperature LLDPE.

### Method of Manufacturing Laminated Packaging Material

The method of manufacturing the laminated packaging material comprises lamination of the bulk layer, gas barrier layer, outermost layer, interjacent layer and innermost layers, and may also comprising coating of the barrier substrate with one or more of the barrier coatings. The layers of the laminated packaging material may be joined in any order.

In a preferred embodiment, the bulk layer and gas barrier layer are laminated, followed by lamination of the gas barrier layer to the innermost layer via the interjacent layer, and then application of the outermost layer (or less preferably followed by application of the outermost layer and then the innermost layer). This order is referred to as "LID" wherein L= lamination of paperboard to barrier layer via bonding layer; I = lamination of innermost layer to barrier layer via interjacent layer; D (décor) = application of outermost layer onto paperboard. The less preferred alternative is referred to as "LDI".

Alternatively, the bulk layer may be initially joined to the outermost layer. This order is referred to as "DLI". This order is particularly suitable when the outermost layer is a dispersion coated thin layer. In this case, dispersion coating may follow printing of the bulk layer, as printing and dispersion coating are similar coating processes. Extrusion coating of the outermost layer is also possible. DLI is further suitable to protect the printed décor on the paperboard, such that it will not be scratched or scuffed or in the following lamination stations.

Preferably, lamination of the bulk layer to the barrier layer is carried out by wet applying an aqueous dispersion of an adhesive composition comprising an adhesive polymer binder onto the web of the bulk layer or onto the web of the barrier layer at an amount from 1 to 5 g/m² dry weight, and pressing the two webs together while they are forwarded through a lamination roller nip, without forced drying.

### Packaging Container and Method of Manufacturing Packaging Container

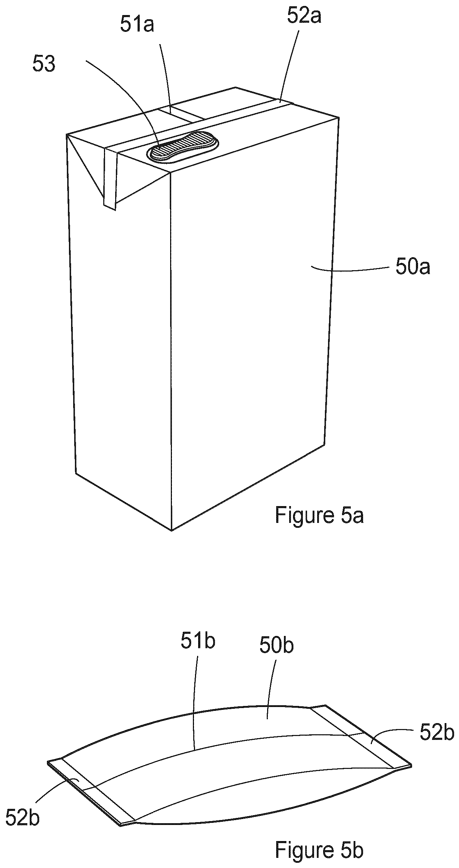

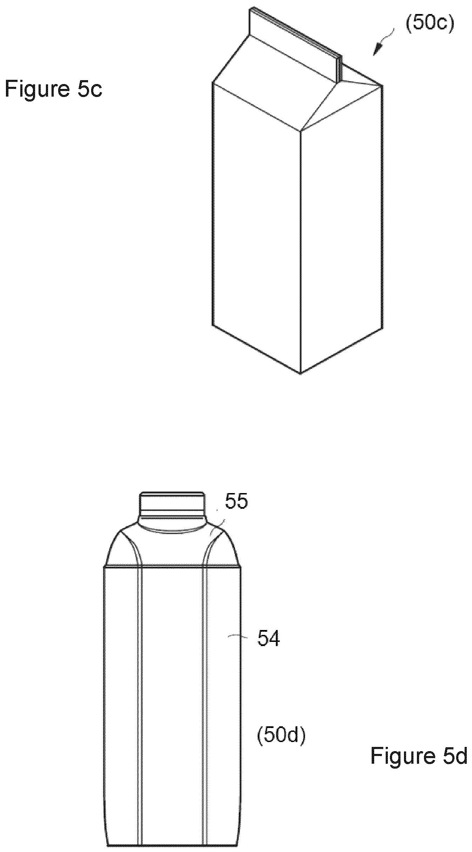

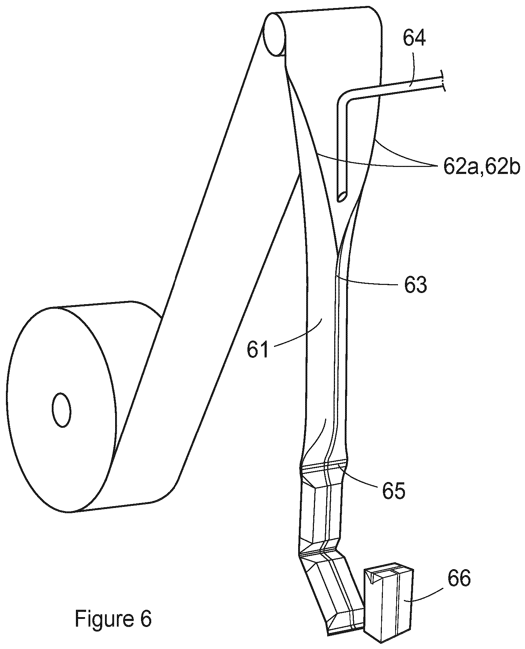

Embodiments of packaging containers in accordance with the invention and methods of making them are described below with reference to Figs. 5 and 6.

A packaging container formed from a described laminated packaging material may be partly sealed, filled with liquid or semi-liquid food and subsequently sealed, by sealing of the packaging material to itself, optionally in combination with a plastic opening or top part of the package.

Preferably, the method comprises induction heat sealing of the laminated packaged material.

### Examples and description of preferred embodiments

In the following, preferred embodiments of the invention will be described with reference to the drawings, of which:
Fig. 1 shows schematically, in cross-section, an embodiment of a laminated packaging material according to the invention,
Fig. 2 shows a further embodiment of a laminated packaging material according to the invention,
Fig. 3a shows schematically a method, for dispersion coating an aqueous barrier composition onto a paper substrate,
Fig. 3b shows schematically a method for laminating two webs together by melt extrusion lamination,
Fig. 3c shows schematically a method, for melt (co-)extrusion coating layer(s) of a thermoplastic heat sealable and liquid-tight polymer onto a web substrate, to form innermost and outermost layers of a packaging laminate of the invention,
Fig. 4 is showing a diagrammatic view of a plant for physical vapour deposition (PVD) coating, by using a solid metal evaporation piece, onto a paper substrate or film,
Fig. 5a, 5b, 5c and 5d are showing typical examples of packaging containers produced from the laminated packaging material according to the invention,
Fig.6 is showing the principle of how packaging containers as shown in Fig. 5a and 5b are manufactured from the packaging laminate in a continuous, roll-fed, form-fill- and seal process,
Fig. 7 shows a schematic cross-section of a longitudinally folded tube of the laminated packaging material of Fig. 1, and
Fig. 8 shows a cross-sectional view of the longitudinal overlap seal of a longitudinally sealed tube of the laminated packaging material of Fig. 1.

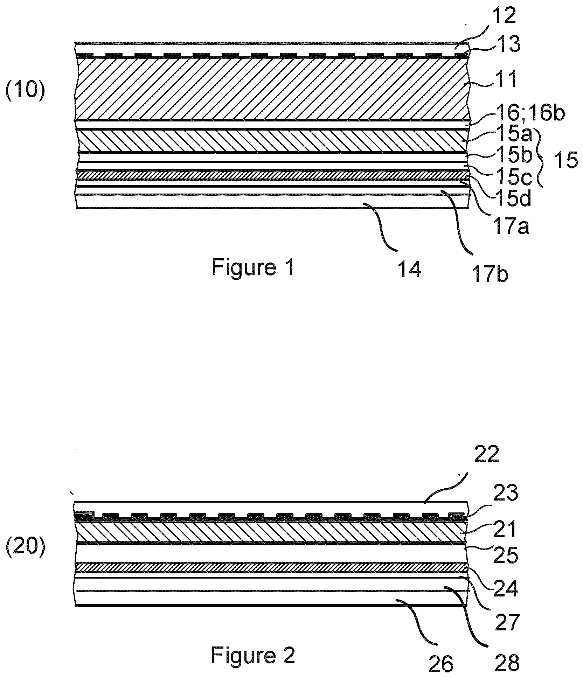

In Fig. 1, a cross-section of an embodiment of a laminated packaging material 10 for liquid carton packaging is shown, in which the laminated material comprises a paperboard bulk layer 11 of paperboard, having a bending force of 80 mN and a grammage weight of 200 g/m², and further comprising an outermost transparent, protective layer 12, in this case a liquid tight and heat sealable layer of LDPE applied at an amount of 12 g/m² on the outside of the bulk layer 11, which side is to be directed towards the outside of a packaging container produced from the packaging laminate. The layer 12 is transparent to show the printed décor pattern 13, applied onto the bulk layer of paper or paperboard, to the outside, thus informing about the contents of the package, the packaging brand and other information targeting consumers in retail facilities and food shops.

The bulk layer 11 is laminated to a paper-based gas barrier layer 15 by a bonding layer 16 of LDPE.

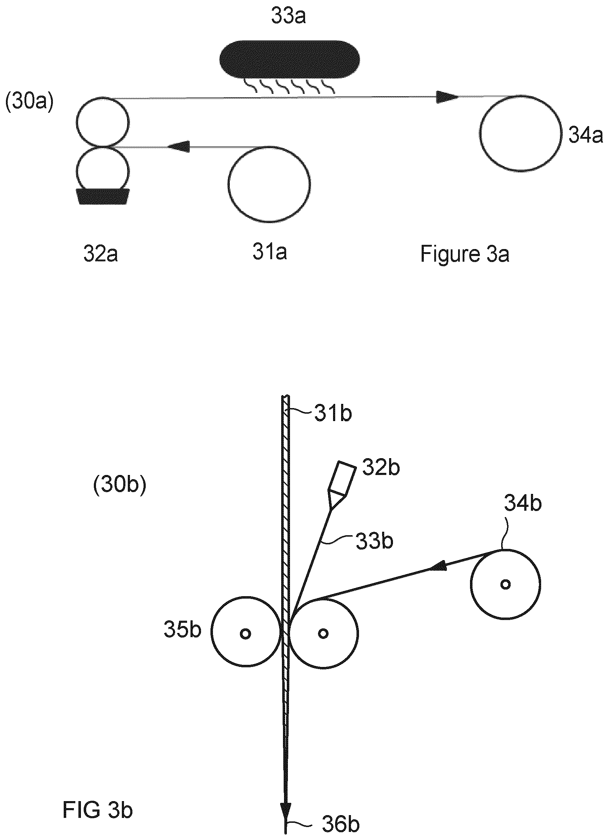

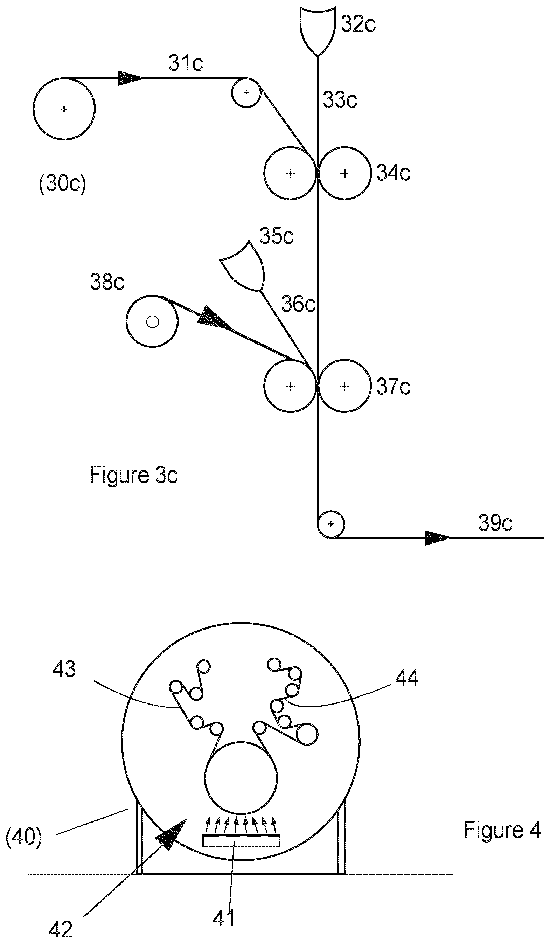

The gas barrier layer 15 comprises a thin paper substrate 15a having a grammage of about 40 g/m². The paper substrate is coated with two coatings 15b,c of PVOH. The PVOH aqueous solution of Poval^{®} 15-99 from Kuraray, which is a polymer providing high gas barrier properties, is applied by means of aqueous dispersion coating and subsequent drying of each of the two layers to a dry grammage of 0.85 g/m², i.e. providing a total amount of about 1.7 g/m² of PVOH. This process is described in more detail below with reference to Fig. 3a. The gas barrier coatings 15b,c are further subsequently coated with a metallisation layer 15d, to protect the gas barrier coating 15b,c and provide the paper barrier layer with water vapour barrier properties in addition to some further oxygen barrier properties. The metallisation coating 15d is applied with additional oxygen into the deposition zone with evaporated aluminium to a sheet resistance of 0.5 Ω/square. This process is described in more detail below with reference to Fig. 4.

The paper-based gas barrier layer 15 is pre-manufactured before being laminated into the full laminated packaging material. The bonding layer 16 is formed by melt extrusion as a thin polymer melt curtain between the two paper webs of the bulk layer 11 and gas barrier paper substrate 15a, and thus laminating these to each other as all three layers pass through a cooled press roller nip, as described in more detail below in connection with Fig. 3b. The grammage of the bonding layer 16 is 8 g/m².

The bonding layer may alternatively be a wet, aqueous bonding layer 16b, which is applied by wet, dispersion coating onto one of the paper webs of the bulk layer 11 and the gas barrier paper susbtrate 15a, and merely pressing together without substantial drying of the aqueous composition. This is possible as the amount of applied aqueous composition is very low, i.e. from 1 to 6 g/m², preferably from 1-5 g /m², dry weight.

An innermost liquid tight and heat sealable pre-manufactured biaxially LLDPE-based cast film 14 is arranged on the side of the packaging laminate which is to be directed towards the inside of the packaging container i.e. the film 14 will be in direct contact with the packaged product. The pre-manufactured cast film 14 is to form strong transversal heat seals of a liquid packaging container made from the laminated packaging material. It is 18 µm thick and exhibits the mechanical properties set out in Table 1.

The innermost pre-manufactured film 14 is well adhered to the surface of the metallised barrier deposition coating 15d by an intermediate coextruded tie layer 17a of EAA copolymer, which is co-extruded together with an interjacent layer 17b of a blend of HDPE and LDPE at a weight ratio of 50:50. This configuration provides both a strong load-bearing effect and high durability and robustness upon fold forming of the laminated packaging material, to protect the sensitive paper-based gas barrier layer 15. The tie and interjacent layers 17a and 17b are applied at 6 and 27 g/m², respectively.

In Fig. 2 is shown a different embodiment of a laminated packaging material 20 of the invention, for liquid paper pouch packaging, in which the laminated material comprises a paper core layer 21, having a bending force of 0 mN and a grammage weight of about 72 g/m². Outer layer 22 and décor layer 23 correspond to layers 12 and 13 of Fig. 1 respectively.

The paper core layer 21 is further laminated to an aluminium foil constituting a barrier layer 24, which provides various barrier properties to the packaging laminate, above all oxygen and light barrier properties. The barrier layer 24 is bonded to the paper core layer 21 by a thermoplastic polymer bonding layer 25, by means of melt extrusion lamination of the thermoplastic polymer. The thermoplastic polymer of the bonding layer 25 is LDPE and it is applied as a single layer at an amount of 15 g/m².

Innermost film 26 corresponds to layer 14 of Fig. 1. The film 26 is well adhered to the surface of the aluminium barrier foil 24 by an intermediate coextruded tie or adhesive polymer layer 27, e.g. of EAA, which is co-extruded together with an interjacent layer 28 as described in connection with Fig. 1. This configuration of the inside polymer layers provides a strong and robust protection of the aluminium foil as well as improved integrity of filled and heat sealed pouch packages. The layers 27 and 28 were applied at 6 and 13 g/m², respectively.

In Fig. 3a, a process of aqueous dispersion coating 30a is shown, which may be used for applying a gas barrier coating 15b,c from an aqueous gas barrier composition onto a substrate, or an aqueous adhesive composition for wet laminating two webs together, of which at least one web has a fibrous cellulose surface. The paper substrate web 31a; 15 is forwarded to the dispersion coating station 32a, where the aqueous dispersion composition is applied by means of rollers onto the top-side surface of the substrate. The aqueous composition has an aqueous content of from 80 to 99 weight-%, and there will be a lot of water on the wet coated substrate that needs to be dried by heat, and evaporated off, to form a continuous coating, which is homogenous and has an even quality with respect to barrier properties and surface properties, i.e. evenness and wettability. The drying is carried out by a hot air dryer 33a, which also allows the moisture to evaporate and be removed from the surface of the paper substrate. The substrate temperature as it travels through the dryer, is kept constant at a temperature of from 60 to 80 °C. Alternatively, drying may be partly assisted by irradiation heat from infrared IR-lamps, in combination with hot air convection drying. The aqueous dispersion coating of a gas barrier composition is usually carried out in two consecutive operations, with intermediate and final drying steps. For best coating efficiency, two coating stations with dryers are present in the line, after which the coated material may be wound up onto a storage reel for further coating and handling.

The resulting barrier-coated paper substrate web 34a is forwarded to cool off and is wound onto a reel for intermediate storage and later further vapour deposition coating of a barrier deposition coating onto the paper substrate 34a.

Figure 3b shows a method for melt extrusion laminating two webs together, such as a barrier material 31b; 15; 24, for example formed by the method 30a of Figure 3a, and a bulk paperboard or paper layer 34b; 11. Thus, the two webs are unwound and forwarded from intermediate storage reels not shown, and joined to each other in a lamination roller nip 35b, while a hot melt curtain of a bonding layer thermoplastic polymer 33b; 16; 25 is extruded via a feedblock and die 32b in between the two webs to be joined. The melt curtain solidifies as it contacts the two cold webs and is pressed together into a laminated sandwich between the webs. One roller of the nip acts as a press roller, while the anvil roller may be a water-cooled steel roller, which thus supports the rapid solidification of the melt curtain polymer into a thick and stable bonding layer, binding the laminated layers of the material 36b together.

Fig. 3c shows a process (30c) for the final lamination steps in the manufacturing of a laminated packaging material, such as 10 or 20, of Fig. 1 and 2, respectively, after the bulk layer 11; 21 first has been laminated to a barrier layer 15; 24. The bulk layer paperboard may have been laminated to the barrier-coated paper substrate by means of wet, cold dispersion adhesive lamination, or by means of melt extrusion lamination, as described above.

The resulting paper pre-laminate web 31c, 36b is forwarded from an intermediate storage reel, or directly from the lamination station for laminating the paper pre-laminate. The non-laminated side of the bulk layer 11; 21, i.e. its print side, is joined at a cooled roller nip 34c to a molten polymer curtain 33c of the LDPE, which is to form the outermost layer 12; 22 of the laminated material, the LDPE being extruded from an extruder feedblock and die 32c.

Subsequently, the paper pre-laminated web, now having the outermost layer 12; 22 coated on its printed side, i.e. the outside, passes a second extruder feedblock and die 35c and a lamination nip 37c, where a molten polymer curtain 36c is joined and coated onto the other side of the pre-laminate, i.e. on the barrier-coated side of the paper substrate, at the same time as it is laminating the pre-manufactured polyethylene film 38c to the inside of the barrier layer 15; 24. Thus, the innermost heat sealable biaxially oriented film 14; 26 is (co)extrusion laminated to the inner side of the bulk-barrier pre-laminate web 31c, to form the finished laminated packaging material 39c, which is finally wound onto a storage reel, not shown. Alternatively, these two coextrusion steps at lamination roller nips 34c and 37c, may be performed as two consecutive steps in the opposite order.

Fig. 4 is a diagrammatic view of an example of a plant 40 for physical vapour deposition, PVD, of e.g. an aluminium metal coating or an aluminium oxide coating, onto a web substrate of the invention. The barrier-coated or pre-coated paper substrate 43; 15a,b,c is subjected, on its pre-coated side, to continuous evaporation deposition of vaporised aluminium, to form a metallised layer of aluminium 15d or, alternatively to a mixture of oxygen with aluminium vapour, to form a deposited barrier coating of aluminium oxide. A barrier-coated paper substrate 44; 15 of the invention is formed. The aluminium vapour is formed from an aluminium evaporation source 41, via thermal evaporation from a resistive heated source. For the coating of aluminium oxide, some oxygen gas may also be injected into the plasma chamber via inlet ports.

In a preferred embodiment, the barrier aluminium metallization coating is oxygen-enriched by injection of additional oxygen 42 at the initial part of the deposition zone in an initial phase of the metal deposition step. The addition of oxygen into the vacuum deposition zone forces the initial coating of the base-coated cellulose-based substrate web 43 to become a reaction product of the evaporated aluminium and the oxygen, i.e. to form aluminium oxide. Rapidly, with the transportation of the base-coated cellulose-based substrate web 43 through the deposition zone, the oxygen concentration decreases to allow also pure metal aluminium deposition coating to be formed, which appearance looks the same as a conventional, standard aluminium metallization coating. The metallic, second phase part of the metallization coating still has more oxygen in it than a standard aluminium metallization coating, in which the level of oxygen content in this second part and phase of the deposition coating is normally very low.

When deposited on an oxygen-containing substrate, such as specifically onto a PVOH material, the gradient of oxygen content throughout the aluminium metallization coating looks the same in an aged, standard barrier aluminium metallization coating as in an oxygen-enriched barrier aluminium metallization coating, however only with higher levels of oxygen, in the form of higher content of aluminium oxide throughout the oxygen-enriched aluminium metallization coating. In a standard metallization coating, this initial aluminium oxide part of the coating is not formed during the deposition coating process, however. A similar, initial aluminium-oxide part of the coating is slowly formed later and over time in a standard aluminium metallization coating but will be immediately formed in an oxygen-enriched aluminium metallization coating.

Fig. 5a shows an embodiment of a packaging container 50a produced from a packaging laminate according to the invention. The packaging container is particularly suitable for beverages, sauces, soups or the like. Typically, such a package has a volume of about 100 to 1000 mL (the latter being "family size"). It may be of any configuration, but is preferably brick-shaped, having longitudinal and transversal seals 51a and 52a, respectively, and optionally an opening device 53. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the merely partly folded packaging container is still easy to handle and dimensionally stable enough to put on a shelf in the food store or on any flat surface.

Fig. 5b shows an alternative example of a packaging container 50b produced from the packaging laminate of Fig. 2. The alternative packaging laminate is thinner than for the packages of the type shown in Fig. 5a by having a thinner paper bulk layer, and thus the not sufficiently bending stiff carton to form a dimensionally stable parallelepipedal or wedge-shaped packaging container. It is not fold formed after transversal sealing 52b, and is thus not provided with crease lines. The packaging container will remain a pillow-shaped pouch-like container after the transversal sealing and will be distributed and sold in this form.

Fig. 5c shows a gable top package 50c, which is fold-formed from a pre-cut sheet or blank, from the laminated packaging material comprising a bulk layer of paperboard and the barrier-coated paper substrate of the invention. Also flat top packages may be formed from similar blanks of material.

Fig. 5d shows a bottle-like package 50d, which is a combination of a sleeve 54 formed from a pre-cut blank of the laminated packaging material of the invention, and a top 55, which is formed by injection moulding plastics in combination with an opening device such as a screw cork or the like. This type of package is for example marketed as Tetra Top^{®} packages. The latter packages are formed by attaching the moulded top 55 with an opening device attached in a closed position, to the tubular sleeve 54 of the laminated packaging material, sterilizing the thus formed bottle-top capsule, filling it with the food product and finally fold-forming the bottom of the package and sealing it.

Fig. 6 shows the principle as described in the introduction of the present application, i.e. a web of packaging material is formed into a tube 61 by overlapping the longitudinal edges 62a, 62b of the web and heat sealing them to one another, to thus form an overlap joint 63. The tube is continuously filled 64 with the liquid food product to be filled and is divided into individual, filled packages by repeated, double transversal seals 65 of the tube at a pre-determined distance from one another below the level of the filled contents in the tube. The packages 66 are separated by cutting between the double transversal seals (top seal and bottom seal) and are finally shaped into the desired geometric configuration by fold formation along prepared crease lines in the material. Corresponding pouch containers may be produced by the same principle, however omitting the final folding steps after the separation of the tube into individual pouch packages.

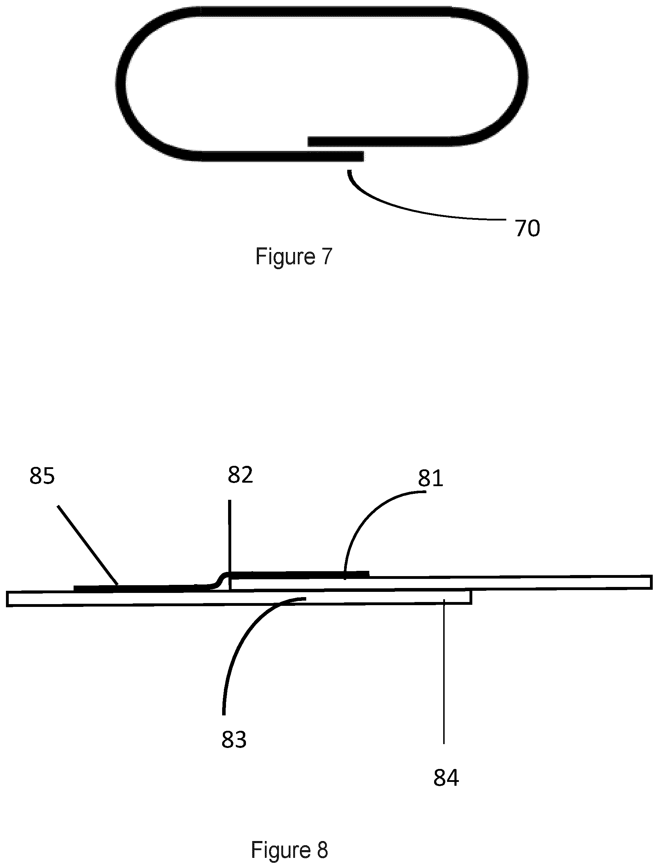

Fig. 7 shows a schematic cross-section of a longitudinally folded tube of laminated packaging material as described in connection with Fig. 6, just before it is flat-folded to be heat sealed transversally across the tube and the overlapping longitudinal sealing area 70 along the tube, by simultaneous application of a mechanical pressing force and heat to weld, i.e. by melt-bonding, and subsequent and immediate cooling, the inside polymer layers of the tube to each other.

Fig. 8 shows a cross-sectional view of a close-up of the longitudinal overlap seal part 70 of a longitudinally sealed tube of packaging material after sealing of the folded tube of Fig. 7 as described above (the opposite wall of the sealed tube, as well as the side parts of the tube, are not shown). A flat longitudinal sealing cover strip 85 of polymer is arranged and sealed along one of the edges, i.e. the so-called "LS-SA" (meaning Longitudinal Seal Strip Application) edge 82, to the inside polymer layers of the packaging material, to cover the otherwise exposed edge 82 of cut material of the overlap edge on the inside of the tube. At this edge, the thickest layer is the bulk layer of cellulose, which would otherwise absorb liquid from the filled product. First the strip 85 is sealed to area 81 in the strip applicator (SA sealing). Then area 81 and strip 85 are sealed to area 83 in the longitudinal sealing (LS). When the tube is transversally sealed, the side of the tube having the LS overlap is sealed to the opposite side of the tube as well, along a narrow transversal seal zone that forms one end of a packaging container unit.

For the longitudinal sealing cover strip of polymer 85 to be properly heat sealed to the inside of the inner overlapping material laminate at the LS-SA area 81, the heat sealable polymer of the innermost inside LLDPE film must be present and cover well up to the edge 82. Then the inside surface of the LLDPE film can participate well in the heat sealing with the cover strip 85 and tightly bond the strip to cover the overlap edge on the inside of the packages.

Similarly, the overlapping longitudinal area of the outer overlap of laminated material 83 also must have its innermost layer fully covering up to the edge 84, to enable proper heat sealing to the outside and outer layer of the underlying laminated material within the LS-SA area 81.

If the innermost inside LLDPE film shrinks before heat sealing is taking place, there will not be any LLDPE film to heat seal with at the edges 82 and 84.

### Examples

### Structure and Formation of Example Laminated Packaging Material with Paper-based Gas Barrier Layer

A laminated packaging material was prepared with the structure of / outermost layer / bulk layer / intermediate bonding layer / gas barrier coated paper substrate/ inside polymer layers (tie layer, interjacent layer, innermost layer)/. The laminated packaging material had the following structure:
/ 12 g/m² LDPE / paperboard (bulk layer) / 8 g/m² LDPE / PVOH coated and metallized 39 g/m² Kraft substrate paper / 6 g/m² adhesive polymer / X g/m² of Y interjacent layer polymer / 17 g/m² LLDPE film /
wherein different types of polymers Y were explored at different amounts X g/m² for the interjacent layer (see Table 2).

The paperboard bulk layer was CLC/C Duplex liquid packaging board from Billerud AB, Sweden, having a bending stiffness 80 mN and basis weight 200 g/m², and being clay-coated on the outer surface only and with an uncoated fibrous inner surface.

The gas barrier substrate was high-density Kraft paper with a surface weight of 39 g/m².

The LDPE in the outermost layer, the bonding layer between the paperboard and the barrier-coated paper, as well as in the interjacent layer, and in the blend with HDPE, was 19N730 from Ineos.

The tie layer, i.e. the adhesive polymer layer, was a layer of an ethylene acrylic acid copolymer, EAA, being Primacor^{™} 3540 from Dow.

The LLDPE film was a cast bi-oriented LLDPE film of 18 µm thickness and surface weight 17 g/m², i.e. SealTOUGH 18X400 from Jindal films. The film was primarily LLDPE and LDPE, with LLDPE as a major polymer component at above 60 weight-%, extrusion cast and subsequently oriented in both MD and CD, i.e. by biaxial orientation. The film had a heat sealable skin layer a few microns thick on its free surface side (towards the inside of a packaging container) comprising m-LLDPE, the degree of orientation being high both in the MD and in the CD. The film also had a co-oriented skin layer on its other side, with a polymer composition different from the core layer.

The HDPE grade was Rigidex HD6070FA from Ineos.

The enhanced LLDPE "EC-LLDPE" grade was Elite^{™} 5811 from Dow.

The PVOH coating was applied in two consecutive steps of coating about 0.85 g/m², dry weight, of an aqueous PVOH solution of Poval^{®} 15-99 from Kuraray with intermediate and subsequent drying at a substrate surface temperature held below 95 °C to evaporate the water content from the aqueous solution.

The metallization of the PVOH-coated and dried paper barrier substrate was performed by physical vapour deposition, PVD, of evaporated aluminium metal. The metal vapour was deposited as a mixture with added oxygen gas injected at the entry of the deposition chamber and the deposition zone, to form aluminium oxide at the interface of the metallization coating to the substrate surface. The formed aluminium oxide had the average formula Al₂O₃. The further coating phase deposits higher proportion of aluminium metal with a much lower oxygen content. The thus oxygen-enriched metallization layer was applied until a sheet resistance of 0.5 Ω/□ was reached, resulting in a coating having an aluminium metallic and shiny appearance, equal to a metal appearance and sheet resistance obtained without any injection of additional oxygen.

The bulk layer, i.e. the paperboard, was laminated to the barrier coated thin paper substrate by melt extrusion lamination with the bonding layer of 8 g/m² LDPE. The biaxially oriented LLDPE film was further laminated to the other side of the barrier-coated paper substrate by melt extrusion lamination of a co-extrusion of a tie layer of 6 g/m² adhesive polymer together with the interjacent layer, with the tie layer adjacent to the barrier-coated paper and the interjacent polymer layer adjacent to the biaxially oriented LLDPE film (CFI orientation).

### Testing of Example Laminated Packaging Material

In order to properly evaluate the root cause to the higher risk of leakages from the LS-SA area, the shrinkage of the film at the LS edges of the laminated material was studied. The inside edge shrinkage, "IES", was measured by studying and measuring the distance from the edge of the laminated carton to the edge of the shrunken inside film at a cross-section of the LS-SA area 81 (Fig. 8) using a magnifying glass with a built-in measuring scale. The shrunken film edge was seen between the carton of the laminated material and the LS cover strip 85.

A maximum shrinkage of the inside polymer film from the edge 82 of 0.5 mm can be acceptable, but sometimes a higher shrinkage may occur, up to a couple of millimeters, which is unacceptable for a reliable LS heat seal and inside cover strip seal, as the whole width of a cover strip for a portion package is 8 mm.

### Formation of Example Packaging Containers

The sample laminated materials were formed into water-filled packaging containers of 200 mL size (portion size) and Tetra Brik^{®} Slim shape, in a Tetra Pak^{®} A3/Speed filling machine. This type of filling machine works according to the tube filling concept described above in connection with Fig. 6. Heat sealing of packages from the continuous filled tube was performed by high frequency induction heat sealing, both along the overlapping longitudinal edges of the continuous tube and in the forming of the transversal heat seals of the tube, thus forming the individual packages that are further cut off from the longitudinally and transversally sealed tube. The obtained packages were emptied and evaluated regarding potential package leakages.

### Testing of Example Packaging Containers

The filled packages from the filling machine tests were emptied, unfolded and studied across the inside of the planar laminate, in particular at the areas that were exposed to mechanical stress during the filling and forming operations. At such areas, the laminated material has typically been severely stressed by multiple folding, and an example of such a location of a Tetra Brik^{®} package is at the bottom corner flaps.

The potentially negative effects on integrity from fold-forming and heat sealing of packages were studied and tested based on the principles of ASTM D5162-21. Such testing is generally referred to as "holiday testing".

The described method in Part B of ASTM D5162-21 was adapted for testing on a flexible packaging material composed of thin polymer layers applied on a conductive layer. By exposing the material to increasing voltages from 0 to 20 kV, spots or areas with thinner material or defective polymer coating (so-called "thinnings") of the polymer layers on the inside of the barrier-coated paper are indicated as voltage breakthroughs at lower voltage than the surrounding, thicker and fault-free polymer coating material.

The lowest voltage level at which a "breakthrough" or "contact" occurred was thus noted and reported for each sample.

The method was thus used for detecting weaknesses in the inside polymer layers at any area of a packaging material.

The test method is a "stress test", i.e. it measures the lowest level of voltage at which the polymer layers would break if stressed, i.e. how high the risk is that the polymer layers might break under unfortunate circumstances, such that the integrity of the package might be jeopardized.
Different materials were tested for the interjacent layer, and the results are shown in Table 2, below.

**Table 2:**

| | **C. Ex. 1a** | **C.Ex 1b** | **C. Ex. 2** | **C.Ex. 3** | **C. Ex. 4** | **Ex. 1** | **Ex. 2** | **Ex. 3.1** | **Ex. 3.2** | | **Ex. 3.3** | | **Ex. 4** | |
|---|---|---|---|---|---|---|---|---|---|---|---|---|---|---|
| | **STRUCTURES:** | | | | | | | | | | | | | |
| **Interjacent layer material Y (X g/m²)** | | | | | | | | | | | | | | |
| | LDPE | LDPE | HDPE | HDPE: | HDPE: | HDPE: | HDPE | HDPE | HDPE | | HDPE | | "EC-LLDPE" Tm= 124 °C | |
| | | | | LDPE 50:50 | LDPE 30:70 | LDPE 50:50 | | | | | | | | |
| | | | | | | | LDPE 50:50 | LDPE 50:50 | LDPE 40:60 | | LDPE 80:20 | | | |
| | (20) | (27) | (13) | (20) | (20) | (25) | (27) | (29) | (23)(29) | | (23) | (29) | | (23)(29) |

| | **EVALUATION:** | | | | | | | | | | | | | |
|---|---|---|---|---|---|---|---|---|---|---|---|---|---|---|
| **IES** | High | High | 0 | 0 | Reduc ed | 0 | 0 | 0 | 0 | 0 | 0 | 0 | 0 | 0 |
| **Integrity of inside polymer layers in package** | OK | OK | Not OK | Not OK | Not OK | OK | OK | OK | OK | OK | OK | OK | OK | OK |

The lowest point of voltage breakthrough was found and noted for each sample. Depending on the percentage of results at different voltage levels, the measured sample results were ranked into the following categories.
1 = Good. Only a very low number of polymer thinnings were indicated, or none, as stressed to breakthrough at a lowest voltage level.
2 = Acceptable. Still low, but a higher number of polymer thinnings as stressed to breakthrough at the lowest voltage level tested, and/or at a slightly higher level of voltages. If not too many thinnings detected at these lower levels, this category may still be within the safety margin to prevent actual defects from developing.
3 = Not acceptable. The number of polymer thinnings is too high, i.e. at the very low voltages tested, and/or at a slightly higher level of voltages. This result is thus not within the safety margin to prevent potential actual defects from developing under severe circumstances.

In practice, the laminates of the present invention should be suitable to withstand very high demands. As a result, it is desirable for their integrity voltage results in testing to indicate that there are hardly any thinnings in the inside polymer layers that lead to voltage breakthrough at the lowest voltage level. To take account of these stringent requirements, the rank or category indicated is 1 = "OK" and 2 or 3 = "Not OK".

Thus, interjacent layers according to the invention (Examples 1-3) were found to give better results than other interjacent layers (Comparative Examples 1a, 1b and 2-4) in terms of reduced inside edge shrinkage and thinning. Certain comparative examples (Comparative Examples 2, 3 and possibly 4) showed acceptable IES but unacceptable thinning. Comparative Examples 1a and 1b showed acceptable thinning but unacceptable IES. When using a lower-melting polymer such as LDPE in the interjacent layer, the innermost inside film will lose its anchoring support as the LDPE layer heats up, and consequently the film will shrink. It was seen that the high-density grade of LLDPE, "EC-LLDPE", behaved very similar to the 50:50 weight ratio blend of HDPE and LDPE. As shown in Example 4, a same example with from 23 to 29 g/m² of the interjacent layer consisting of the high-density LLDPE with a melting point of above 115 °C, is thus also a working variant according to the invention.

Advantages of preferred embodiments of the invention include:
- The laminated packaging material provides good integrity when transformed into filled packaging containers, by good adhesion between the adjacent layers within the laminated construction and by the resilience of the inner layers. For the packaging of liquids, it is important that the inter-layer adhesion properties are maintained also under wet packaging conditions. A further important contributing factor to package integrity is the quality of the inside polymer layers, which are positioned inside of the barrier layer(s) and form the inner defence for the filled liquid food product. The inside polymer layers need to retain their thickness upon stress and strain in fold-forming into packages and thus they need to have adequate mechanical toughness and strength properties. In the tested examples, the inner layers also stayed intact per se, without thinning or other defects. The pre-manufactured film showed good homogeneity and reliability regarding thickness and quality, and significantly fewer defects (pinholes, un-evenness etc) than melt extrusion coated layers.
- The laminated packaging material provides good gas barrier properties. The barrier coatings were protected from cracking by the inner layers, with OTR properties thus being maintained. This is important for paper substrates, which are less flexible and more prone to cause cracks in the thin barrier coatings, as the cellulose material breaks upon folding of the paper. For the packaging of liquids, it is also important that oxygen gas barrier properties are maintained under wet packaging conditions, and this was achieved by combining PVOH and Al metallisation gas barrier layers.

- Good heat seals were achieved, and shrinking of the cast film was not found. By preventing such inside film shrinkage, the integrity of the longitudinal seal, LS, as well as of the transversal heat seals, TS, where they cross the LS, is greatly improved, which is an important contributing factor to the total integrity of a package.
- Openability is good because of the use of a cast film rather than a blown film in the innermost layer.
- The use of a paper substrate for the gas barrier layer provides good sustainability and recyclability.

As a final remark, the invention is not limited by the embodiments shown and described above but may be varied within the scope of the claims.

### Reference Numbers:

10 laminated packaging material
11 bulk layer
12 transparent protective layer
13 décor pattern
14 film
15 gas barrier layer
15a paper substrate
15b,c gas barrier coatings
15d metallisation layer
16 melt extrusion bonding layer
16b wet lamination bonding layer
17a tie layer
17b interjacent layer
20 packaging material
21 paper core layer
22 transparent heat-sealable layer
24 aluminium barrier layer
25 thermoplastic polymer bonding layer
26 polyethylene heat-sealable layer
27 adhesive polymer layer (tie layer)
28 interjacent layer
30a dispersion coating process
30b extrusion lamination process
30c extrusion coating process
31a paper substrate web
31b barrier material
31c pre-laminate web
32a dispersion coating station
32b feedblock and die
32c feedblock and die
33a hot air dryer
33b thermoplastic polymer
33c molten polymer curtain
34a barrier coated paper substrate web
34b paperboard or paper layer
34c lamination roller nip
35b lamination roller nip
35c feedblock and die
36b laminated layers, pre-laminate web
36c molten polymer curtain
37c lamination roller nip
38c polyethylene film
39c finished laminated packaging material
40 PVD plant
41 aluminium source
43 pre-coated or uncoated paper substrate
44 barrier-coated paper substrate
50a packaging container
50b pouch packaging container
50c gable top package
50d bottle-like package
51a longitudinal seals
52a transversal seals
53 opening device
54 tubular sleeve
55 top, moulded top
61 tube
62a longitudinal edge
62b longitudinal edge
63 longitudinal overlap joint
64 tube filling step
65 transversal seal
66 packages
70 longitudinal sealing area
81 LS-SA area
82 inside edge
83 overlap
84 outside edge
85 sealing cover strip

## Claims

1. A laminated packaging material (10) for packaging of oxygen-sensitive food products, such as liquid, semi-liquid or viscous food products or water, comprising in order from outside to inside:
- a first outermost, liquid tight, heat sealable layer (12) comprising a thermoplastic polymer;
- a bulk layer (11) of paper, paperboard or other cellulose-based material;
- a barrier layer (15) comprising a cellulose-based substrate (15a) and at least one gas barrier coating (15b-d);
- an interjacent layer (17b) comprising HDPE, MDPE, and/or high melting temperature LLDPE having a melting temperature above 115 °C; and
- an innermost liquid tight, heat sealable layer comprising a pre-manufactured cast and biaxially oriented LLDPE-containing film (14).

2. A laminated packaging material (10) as claimed in Claim 1, wherein the interjacent layer (17b) comprises a blend of HDPE or MDPE with LDPE, or consists of high melting temperature LLDPE.

3. A laminated packaging material (10) as claimed in Claim 2, wherein the interjacent layer (17b) comprises a blend of 40 to 80 wt% HDPE or MDPE, preferably 50 to 70 wt% HDPE or MDPE, and 20 to 60 wt%, preferably 20 to 50 wt%, LDPE.

4. A laminated packaging material (10) as claimed in any one of the preceding claims, wherein the interjacent layer (17b) is present in an amount of 23 to 35 g/m², preferably 23 to 30 g/m², such as 23 to 29 g/m², such as 25 to 29 g/m².

5. A laminated packaging material (10) as claimed in any one of the preceding claims, wherein the pre-manufactured film (14) comprises from 60 to 100 % of linear-low density polyethylene (LLDPE), preferably 80 to 100 % LLDPE, more preferably 90 to 100 % LLDPE, and wherein the LLDPE is preferably m-LLDPE.

6. A laminated packaging material (10) as claimed in any one of the preceding claims, comprising a paperboard bulk layer (11) having a grammage from 100 to 520 g/m², preferably from 180 to 300 g/m².

7. A laminated packaging material (10) as claimed in any one of the preceding claims, wherein the coating(s) (15b-15d) comprise a gas barrier polymer and/or a vapour deposition coating of a gas barrier material selected from metals, metal oxides, inorganic oxides and amorphous diamond-like carbon coatings.

8. A laminated packaging material (10) as claimed in any one of the preceding claims, wherein the barrier layer (15) is laminated to the bulk layer (11) by means of a bonding layer (16; 16b) of one or more polymers.

9. A method for manufacturing of a laminated packaging material (10) as defined in any one of the preceding claims, comprising the steps, in any order, of
a) laminating (30b, 35b) a continuous web of the bulk layer (11; 34b) of paper, paperboard or other cellulose-based material to the outer side of a continuous web of the barrier layer (15; 31b),
b) laminating (35c, 37c) a continuous web of the pre-manufactured film (14), as an innermost liquid tight, heat sealable layer, to the other, inner side of the web of the barrier layer (15), by melt extrusion lamination, with the interjacent layer (17b), and
c) extrusion coating (32c, 34c) a first outermost, liquid tight, heat sealable layer (12; 33c) on the outer side of the bulk layer (11; 31c; 34b).

10. A method as claimed in Claim 9, wherein step a) is carried out by wet applying an aqueous dispersion of an adhesive composition comprising an adhesive polymer binder onto the web of the bulk layer (11; 34b) or onto the web of the barrier layer (15) at an amount from 1 to 5 g/m² dry weight, and pressing the two webs together while they are forwarded through a lamination roller nip, without forced drying.

11. A packaging container (50a; 50b; 50c; 50d) for packaging of oxygen sensitive food products, such as liquid, semi-liquid or viscous food products or water, comprising the laminated packaging material (10; 20) as defined in any one of Claims 1-8.

12. A method of manufacturing a packaging container (50a; 50b; 50c; 50d) as claimed in Claim 11 from a web or blank of the laminated packaging material (10; 20).

13. A method as claimed in Claim 12, comprising induction heat sealing of the laminated packaged material (10; 20).

14. A laminated packaging material (20) for pouch packaging of oxygen-sensitive food products, such as liquid, semi-liquid or viscous food products or water, comprising in order from outside to inside:
- a first outermost, liquid tight, heat sealable layer (22) comprising a thermoplastic polymer;
- a bulk layer (21) of paper, paperboard or other cellulose-based material having a grammage from 50 to 140 g/m², such as from 70 to 120 g/m², such as from 70 to 110 g/m²;
- a barrier layer (24) of aluminium foil,
- an interjacent layer (28) comprising **HDPE, MDPE,** and/or high melting temperature **LLDPE** having a melting temperature above 115 °C; and
- an innermost liquid tight, heat sealable layer comprising a premanufactured cast and biaxially oriented LLDPE-containing film (26).
